# EUROPEAN PATENT SPECIFICATION

(11) **EP 1 661 528 B1**
(45) Date of publication and mention of the grant of the patent: **07.01.2009**
(21) Application number: 05025938.1
(22) Date of filing: 29.11.2005
(51) Int. Cl.: A61C 5/02

(54) **Root canal treatment tool**
Zahnwurzelbehandlungsinstrument
Instrument de traitement pour racines dentaires

(30) Priority: 29.11.2004 JP 2004344717
(43) Date of publication of application: 31.05.2006
(73) Proprietor: Mani, Inc., Shioya-gun, Tochigi-ken (JP)
(72) Inventor: Matsutani, Kanji Mani, Inc., Tochigi-ken (JP); Ohgane, Kaoru Mani, Inc., Tochigi-ken (JP); Takase, Toshiyuki Mani, Inc., Tochigi-ken (JP)
(74) Representative: Patentanwälte Westphal, Mussgnug & Partner

(56) References cited:
- EP-A- 1 354 566
- EP-A- 1 481 645
- US-A- 6 149 501
- US-A1- 2002 137 008
- US-B1- 6 431 863

## Description

### BACKGROUND OF THE INVENTION

### 1. Field of the Invention

The present invention relates to a root canal treatment tool for dental use, and more particularly, to a root canal treatment tool having improved durability against fatigue caused by the rotation of the root canal treatment tool that performs a treatment purpose by being rotated, inserted and extracted in a lengthwise direction, and repeatedly rotated forward and rearward about 1/4.

### 2. Description of the Related Art

Tools for treating the root canal of a tooth while being rotated include a file and reamer that cut and form a root canal. These root canal treatment tools are composed of a member having a working portion provided with a cutting blade or piercing protrusion formed to a slender tapered rod so as to be appropriate for a treatment purpose or composed of a member having a working portion formed by molding a tapered rod in a spiral shape. Further, some kind of tool includes a handle or a grip which is integrated with an end of the member and gripped and manipulated by a dentist so that it is gripped by a chuck of a hand piece and the like or directly manipulated by the dentist.

The root canal is excessively thin and has a variety of shapes and sizes and is very different between persons. For this reason, many tools of different sizes are provided even for the same kind of root canal treatment tools. For example, in the case of cutting and forming a root canal by using a file, the file is required to be deformed along the shape of the root canal, that is, to have appropriate elasticity so that it should not hurt the surrounding of the root canal.

A technology disclosed in Japanese Patent No, 3375765 is proposed as a root canal treatment tool having extremely high elasticity and shape restoration property as described above. This technology relates to a root canal treatment tool having a working portion formed and manufactured by applying a removing process to a rod-shaped raw material that is subjected to shape memory heat treatment and has a superelastic characteristic while holding it under a memory treatment temperature.

In the above root canal treatment tool, the rod having the working portion formed thereon is flexibly deformed in response to an external force applied thereto and is quickly restored to an original shape with the removal of the external force. For this reason, this tool can extremely follow up the shape of the root canal with an extremely high follow-up property and form the root canal with high accuracy.

In the root canal treatment tool relating to Japanese Patent No. 3375765, the working portion has a uniform superelastic characteristic along the whole length. Accordingly, when the working portion is bent, a tip of a free end also has an action of returning to an original shape, thereby stress is generated when the tip is inserted into and bent in the root canal for the treatment of the root canal. In particular, when the root canal is to be formed, the tool is rotated in a state that a tip portion of the working portion is mainly bent, from which a problem arises in that there is a high possibility that the slender tip portion is damaged because stress acts on the working portion repeatedly.

A further root canal treatment tool is disclosed in EP1354566.

### SUMMARY OF THE INVENTION

Accordingly, an object of the present invention is to provide a root canal treatment tool which has a less possibility of being damaged even if it is bent repeatedly by being rotated to form a root canal, that is, which has high durability.

To solve the above problem, there is provided a rod-shaped root canal treatment tool composed of Ni-Ti alloy and having a working portion of a predetermined length from a tip as well as a shank formed continuously to the working portion, wherein at least a part of the working portion or the entire working portion is subjected to heat treatment at 400° C to 450° C for 30 minutes to 45 minutes.

Since the root canal treatment tool of the present invention is subjected to this heat treatment at least in a part of the working portion or in the entire working portion, the treatment tool can be exhibit high durability against repeated bending caused when it is rotated to treat a root canal.

### BRIEF DESCRIPTION OF THE DRAWINGS

Fig. 1 is a view showing a file as an example representative of a root canal treatment tool;
Fig. 2 is a schematic view explaining an arrangement of the file when a fatigue breakage test of a tip portion of the file is performed; and
Fig. 3 is a graph showing a result of test of a fatigue breakage time when the same material is subjected to heat treatment at different temperatures.

### DESCRIPTION OF THE PREFERRED EMBODIMENTS

A root canal treatment tool according to the present invention is a tool for treating a root canal by being rotated and includes all the tools formed of a rod-shaped material composed of nickel-titanium (Ni-Ti) alloy. In this root canal treatment tool, a working portion having a shape capable of performing a treatment purpose most reasonably is formed at one end portion and a manipulation portion manipulated by a dentist is formed at the other end portion. When the dentist directly manipulates the tool, this manipulating portion is formed of a handle and when a tool such as a hand piece is used, the manipulating portion is provided with a grip formed in a shape suitable for the structure of a handle of the tool.

In particular, heat treatment is performed at 400° C to 450° C for 30 minutes to 45 minutes at least in a part of the working portion or the entire working portion to thereby eliminate a possibility of breakage of the tool by improving the durability of the portion thereof repeatedly bent when a root canal is treated by the tool.

### (Embodiment 1)

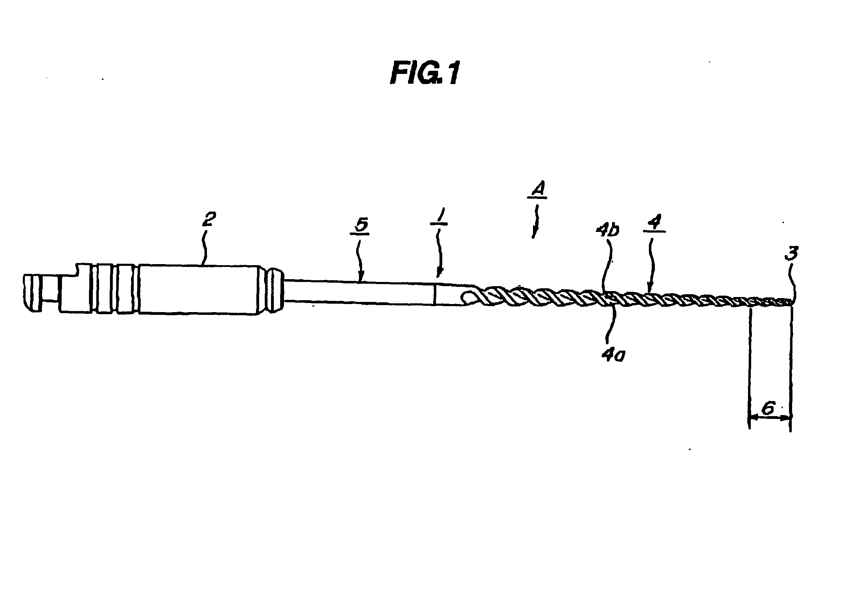

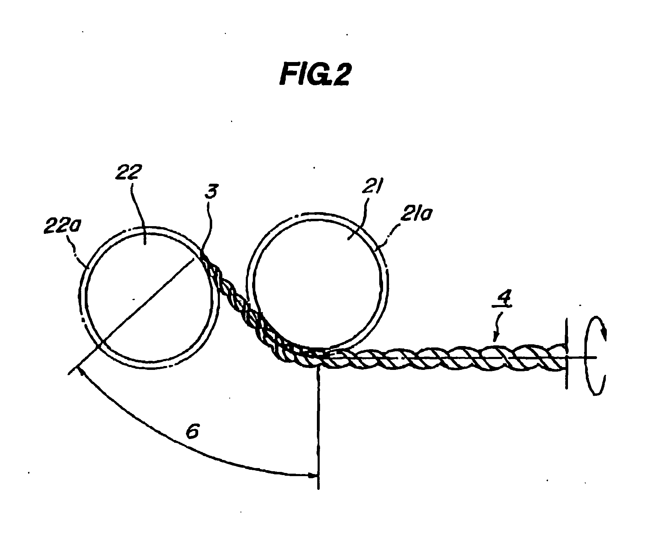

A preferable embodiment of a root canal treatment tool according to the present invention will be explained below with reference to the drawings. Fig. 1 is a view showing a file as an example representative of the root canal treatment tool. Fig. 2 is a schematic view explaining an arrangement of the file when a fatigue breakage test of the tip of the file is performed.

A shape of a file A, which is representative of the root canal treatment tool, will be explained with reference to Fig.1, The file A is a tool for cutting a wall in a root canal and composed of a needle portion 1 and a grip 2.

A tapered working portion 4 extending in a predetermined length from a tip 3 is formed to the needle portion 1, and a straight shank 5 is formed continuously to the working portion 4. The working portion 4 is configured to have various cross sections according to a kind of the file, such as rectangle, triangle, or square so as to exert its unique function.

In the file A of the embodiment, a rectangular cross section is formed in a spiral shape along the working portion 4 to thereby form a groove 4a and a cutting edge 4b along the groove 4a

The shank 5 has a function of being mounted in the grip 2. As shown in the drawing, the grip 2 is configured so as to be gripped by a chuck of a handle piece or so as to be gripped and manipulated by a dentist, thereby being formed in a shape and of a material corresponding to the respective functions.

For example, the grip 2 shown in the drawing is made of metal such as stainless steel or the like and has the shank 5 inserted into a hole formed at its center and fixed thereto with adhesive. Further, when a grip is formed such that it is gripped and manipulated by a hand of the dentist, the grip may be molded by injection molding of synthetic resin so as to have the shank 5 inserted therein, thereby being integrated with.and fixed to the shank 5.

The needle portion 1 is composed of nickel-titanium (Ni-Ti) alloy and is formed of a wire having a diameter corresponding to the diameter of the needle portion 1 constituting the file A. The needle portion 1 is subjected to heat treatment at 400° C to 450° C for 30 minutes to 45 minutes in a portion 6 as a part of the working portion 4 (hereinafter, referred to as "durable heat treatment").

Note that although the durable heat treatment to the file A is applied only from the tip 3 to the portion 6 of the working portion 4, it is needless to say that the durable heat treatment may be applied to the working portion 4 in its entirety in the present invention.

The length of the portion 6 of the working portion 4 is not particularly limited. According to the experiment performed by the inventors of the present invention, when the working portion was provided with a superelastic characteristic in its entirety, breakage occurred in a portion 2 mm to 3 mm apart form a tip in many examples. Thus, the portion 6 of the working portion 4 requires at least 2 mm from the tip 3 and requires the entire length of the working portion 4 at maximum. Further, when the working portion 4 has a length of 16 mm, the particularly preferable range of length of the portion 6 is about 3 mm to 10 mm from the tip 3 and a length of about 3 mm or 4 mm is more preferable.

Further, the length of the portion 6 may be changed in correspondence to the taper of the file A. When the taper is, for example, 2/100, the portion apart from the tip 3 of the working portion 4 (grip side portion) does not have a large diameter. Therefore, strength can be maintained on the grip side by forming the portion 6 in a predetermined range extending from the tip 3 and providing the other portion with the superelastic characteristic. When the taper is 4/100 or 6/100, since the diameter on the grip side increases, even if the durable heat treatment is applied to the working portion 4 in its entirety, strength is maintained on the grip side with excellent operability.

The portion 6 of the working portion 4 can be subjected to the durable heat treatment by increasing the temperature of the portion (the portion 6 or the entire working portion 4) to be subjected to the treatment to the temperature obtained by a test described later as well as keeping the increased temperature for a time obtained by the test. In the durable heat treatment, the Af temperature of the nickel-titanium alloy used as the material of the file is increased to a temperature higher than normal temperatures so that the portion 6 is arranged as a portion that can exhibit a shape memory function.

In the file A arranged as described above, the dentist can previously curve the portion 6 in correspondence to the shape of a root canal or an apical foramen of a patient (precurve) in treatment. The thus formed precurve permits the tip 3 and the portion 6 to exhibit an excellent follow-up property to the root canal when treatment is performed by inserting the tip 3 into the root canal. After the treatment is finished and the tip 3 is extracted from the root canal, the portion 6 can be returned to its original shape by force applied thereto by the dentist or the original shape of the portion 6 can be recovered by increasing the temperature thereof to a temperature higher than the Af temperature set by the durable heat treatment.

Since the portion 6 has high flexibility, a period of time until it is broken can be extended when the working portion 4 is bent and rotated while inserting the tip 3 into the root canal, inserted and extracted in a lengthwise direction, and repeatedly rotated about 1/4 forward and rearward.

In particular, because the working portion 4 is formed in the shape of a taper, when the working portion 4 is bent with a fulcrum at the tip 3, the shank 5 is kept nearly in a straight line and the working portion 4 is bent to an arc shape having a small curvature on the shank 5 side and is greatly bent to an arc shape that increases a curvature as its portion is closer to the portion 6 side and the portion 6 is further greatly bent. That is, the working portion 4 is not uniformly bent but is bent in response to the taper. When the bending of the working portion 4 is released, the portions other than the portion 6 are restored to the original shape (in, for example, a straight needle shape) and the portion 6 keeps a bent shape.

Next, a test method of setting a heat treatment temperature and a keeping time (heat treatment conditions) when heat treatment is performed to the portion 6 as a part of the working portion 4 or the entire working portion 4 paying attention to the durability against the rotation fatigue and a result of the test will be explained.

An object of the test is to investigate heat treatment conditions in which the file A can exhibit highest durability as well as to investigate heat treatment conditions common to different types of nickel-titanium alloy assuming a case that a root canal is treated by most harshly rotating the root canal treatment tool among the treatments performed by rotating the tool, inserting and extracting it in the lengthwise direction, or repeatedly rotating it about 1/4 forward and rearward.

For this purpose, in the experiment, files A having the same specification were formed of a plurality of types of nickel-titanium alloy wires, a plurality of samples were subjected to heat treatment at different temperatures for different keeping times, and then the fatigue breakage thereof was tested using an apparatus shown in Fig. 2, thereby times passed until they were broken were measured, and heat treatment conditions in consideration of durability against rotation fatigue were obtained by comparing the results of measurement.

Although a time that passes until the file A is broken due to fatigue is preferably as long as possible, whether or not the time is long cannot be determined unless a certain reference is set. Thus, in the test, about 20 minutes, during which breakage due to fatigue does not occur in a test performed using a fatigue breakage tester to be described later, are set as the reference.

Used as raw materials constituting files A were wires having a diameter of about 1.0 mm and composed of a material 1 having a composition of Ni: 55.76 wt% and the balance being Ti, a material 2 having a composition of Ni: 55.91 wt% and the balance being Ti, a material 3 having a composition of Ni: 55.97 wt% and the balance being Ti, a material 4 having a composition of Ni: 55.90 wt% and the balance being Ti, and a material 5 having a composition ofNi: 55.89 wt% and the balance being Ti were used as the material for forming the files A, and a plurality of pieces of files #30 were formed of these wires. Each file had a tip portion having a tip diameter of about 0.3 mm, a taper of 4/100, a cross section formed in a rectangular shape, a needle portion extending from a grip 2 and having a length of about 25 mm, and a working portion having a length of about 15 mm.

Next, samples, which were not subjected to heat treatment (untreated), samples, which were subjected to heat treatment at 300° for 30 minutes (heat treatment condition 1), samples, which were subjected to heat treatment at 400° for 30 minutes (heat treatment condition 2) and then, samples, which were subjected to heat treatment at 500° for 30 minutes (heat treatment condition 3), samples, which were subjected to heat treatment at 600° for 15 minutes (heat treatment condition 4) were made from the files A composed of the materials 1 to 5. Then, these samples were subjected to a fatigue breakage (durability) test and additionally subjected to a bend test and a twist test.

It should be noted that, in the respective tests, the heat treatment included a case in which the entire working portion 4 was subjected to the heat treatment by inserting the needle portion 1 composed of Ni-Ti alloy into an electric furnace and a case in which the heat treatment was performed in correspondence to the portion 6 from the tip 3. Further, the number of the samples to be tested in the same condition was set to 5 pieces. Further, numerical values shown summarize test data.

First, a method of a bend test and a result of it will be explained. The bend test was performed by using samples whose needle portions 1 were entirely subjected to the heat treatment and by measuring maximum torque when the samples were bent up to 45° while gripping them at a position 3 mm apart from the tip 3 of the working portion 4. As a result of the bend test, the materials 1 to 5 of the non-treatment condition were within the range of 40 gf-cm to 50 gf-cm, the materials 1 to 5 of the treatment condition 1 were within the range of 40 gf-cm to 55 gf-cm, the materials 1 to 5 of the treatment condition 2 were within the range of 35 gf-cm to 40 gf-cm, the materials 1 to 5 of the treatment condition 3 were within the range of 30 gf-cm to 40 gf-cm, and the materials 1 to 5 of the treatment condition 4 were within the range of 3 5 gf-cm to 40 gf-cm, which results in that no significant difference cannot be admitted.

Next, a method of the twist test and a result of it will be explained. The twist test was performed by using samples whose needle portions 1 were entirely subjected to the heat treatment and by measuring maximum torque and angles when the samples were rotated and broken while gripping them at a position 3 mm apart from the tip 3 of the working portion 4. As a result of the twist test, the materials 1 to 5 of the non-treatment condition were within the range of maximum torque 70 gf-cm to 80 gf-cm, angle: 400° to 500°, the materials 1 to 5 of the treatment condition 1 were within the range of maximum torque 70 gf-cm to 80 gf-cm, angle: 400° to 500°, the materials 1 to 5 of the treatment condition 2 were within the range of maximum torque 80 gf-cm to 120 gf-cm, angle: 400° to 600°, the materials 1 to 5 of the treatment condition 3 were within the range of maximum torque 70 gf-cm to 100 gf-cm, angle: 450° to 700°, and the materials 1 to 5 of the treatment condition 4 were within the range of maximum torque 70 gf-cm to 90 gf-cm, angle: 800° to 1100°, which results in that although the result of test of the samples of the heat treatment condition 4 are more advantageous than the samples of the other heat treatment conditions, it cannot be admitted that the samples of the other heat treatment conditions have a significant difference.

Next, a method of the fatigue breakage test and a result of it will be explained. The fatigue breakage test was performed using the needle portions 1 entirely subjected to the heat treatment and the apparatus shown in Fig. 2. More specifically, the apparatus used for the test had a pair of pins 21, 22 disposed therein, and the pins 21, 22 had grooves 21a, 22a capable of receiving the tip 3 side of the working portion 4. The working portion 4 was set to the apparatus such that the position thereof apart 4 mm from the tip 3 was located at the center of the pin 21 on one hand as well as the tip 3 was inserted into the groove 22a of the pin 22 on the other hand. Then, a time passed until the working portion 4 was broken was measured in a state that the working portion 4 was rotated at a speed of 200 rpm while bending the portion 6 of the working portion 4 at approximately 45°.

As a result of the fatigue breakage test, it can be found that the time passed until fatigue breakage occurs greatly changes depending on the heat treatment conditions. More specifically, in the non-treatment condition, the time was about 18 minutes even in the most durable material 2, within the range of 5 to 10 minutes in the heat treatment condition 1, within the range of 4 to 11 minutes in the heat treatment condition 3, and within the range of 4 to 5 minutes in the heat treatment condition 4. Whereas, in the heat treatment condition 2 (400°C for 30 minutes), it was within the range of about 8 to 56 minutes which were greatly longer than the times of the samples which were fatigue broken in the other heat treatment conditions.

More specifically, when the heat treatment is performed in the heat treatment condition 2, an effect of greatly extending the fatigue breakage time can be obtained, from which it can be said that the heat treatment can exhibit high durability.

As described above, it can be found that the durability of the root canal treatment tool can be improved by performing the heat treatment while keeping the raw material of Ni-Ti alloy at 400°C for 30 minutes. However, it is not apparent whether or not the condition of 400°C for 30 minutes is an optimum condition. Accordingly, the fatigue breakage test was performed by changing temperature while specifying a material and employing a constant treatment time.

The above material 2 having the composition of Ni: 55.91 wt% and the balance being Ti was used in the test. Further, a heat treatment temperature was set to 250°C, 300°C, 350°C, 375°C, 400°C, 410°C, 420°C, 425°C, 430°C, 440°C, 450°C, 475°C, 500°C, and 550°C, and the fatigue breakage test was performed to the samples subjected to the heat treatment at the respective temperatures.

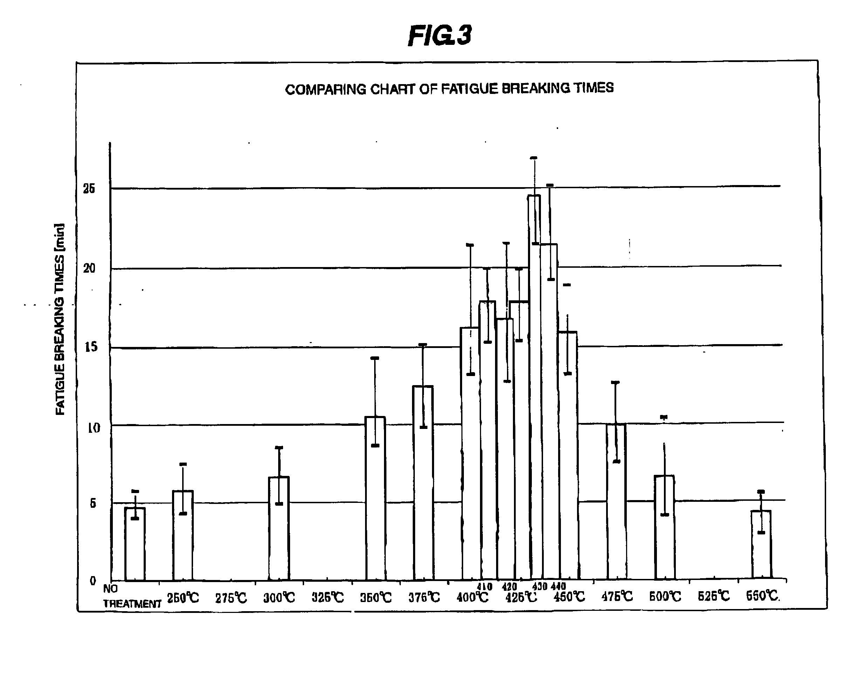

Fig. 3 shows a result of the fatigue breakage test. As shown in the drawing, when the heat treatment temperature is within the range of 400°C to 450°C, the time passed until the fatigue breakage occurs exceeds 15 minutes and exceeds 20 minutes at 430°C and 440°C. It can be said from the result of the test that the heat treatment paying attention to the durability against the rotation fatigue in the entire working portion can be performed by the heat treatment executed at the temperature within the range of 400°C to 450°C for 30 minutes.

Next, the fatigue breakage test was also performed using a partial heat apparatus (not shown) to samples each formed of the above material 2 having the composition ofNi: 55.91 wt% and the balance being Ti and subjected to the heat treatment within the range of about 5 mm and about 10 mm from the tip 3 of the working portion 4. In the test, a keeping time was set to 45 minutes (fixed) and heat treatment temperature - temperature set to the partial heat apparatus were selected from 400°C (350°C, 340°C), 425°C (370°C, 360°C), 450°C (390°C, 375°C), 475°C (410°C, 390°C), 500°C (440°C, 420°C), 525°C (460°C, 430°C), and 550°C (480°C, 440°C). Further, the fatigue breakage test was also performed to samples subjected to the heat treatment at 400°C for 40 minutes using a drier as a comparative example.

Note that since the heat treatment to sample in the ranges of about 5 mm and about 1.0 mm from the tip of the working portion 4 is performed to a very thin rod by restricting the range thereof, the size of the range cannot be accurately regulated. Thus, since it is difficult to show the range of the lengths from the tip 3 by accurate numerals, the range cannot help being shown as about 5 mm and about 10 mm.

When the heat treatment is performed using the partial heat apparatus, it cannot be guaranteed that the temperature set to the partial heat apparatus accurately corresponds the actual temperature of the sample. When the surface temperatures of the samples were measured at the time the heat treatment was actually performed by the partial heat apparatus, there were differences between the surface temperatures and the temperature set to the apparatus, More specifically, the former temperatures in parentheses were the surface temperatures of the samples when they were heated within the range of about 5 mm from the tip and the latter temperatures in parentheses were the surface temperatures of the samples when they were heated within the range of about 10 mm from the tip with respect to the temperature set to the partial heat apparatus. As described above, the surface temperatures of the samples being subjected to the heat treatment are lower than the temperature set to the partial heat apparatus.

As a result of the above test, when the heat treatment was performed within the range of about 5 mm, the time until the fatigue breakage occurred was about 29 minutes when the heat treatment temperature was set to 425°C, and, in the other heat treatment conditions, the fatigue breakage occurred in a time shorter than 20 minutes.

When the range of the heat treatment was within about 10 mm, the time until the fatigue breakage occurred exceeded 20 minutes at the heat treatment temperature set within the range of 425°C to 500°C. Further, the fatigue breakage occurs in about 19 minutes at the heat treatment temperature set to 525°C.

Further, in the comparative example, the time until the fatigue breakage occurred was about 35 minutes.

In practical application, it is sufficient that the time until the fatigue breakage occurs be at least about 20 minutes. Accordingly, it can be said that the heat treatment can be performed paying attention to the durability against the rotation fatigue in a part of the working portion by heat treating the file A whose range of about 5 mm from the tip is to be heat treated in the heat treatment condition of 425°C for 45 minutes and by heat treating the file A whose range of about 10 mm from the tip is to be heat treated in the heat treatment condition of 425°C for 45 minutes to 525°C for 45 minutes.

As described above, it can be said that the heat treatment can be performed paying attention to the durability against the rotation fatigue in a part of the working portion or in the entire working portion by performing the heat treatment at the heat treatment temperature within the range of 400°C to 450°C for a keeping time of 30 minutes to 45 minutes comprehensively judging from a result of the fatigue breakage test of the samples whose working portion 4 was entirely heat-treated and from a result the fatigue breakage of the samples whose ranges of 5 mm and 10 mm from the extreme end of the working portion were heat-treated.

In the file A described above, the grip 2 is gripped by a chuck of a hand piece (not shown) as well as the hand piece is held by the dentist, the portion 6 formed to the working portion 4 is previously bent in correspondence to the shape of the root canal of the patient, and then the tip 3 is inserted into the root canal and moved in an axial direction while being rotated in the direction of the cutting edge 4b, thereby the root canal can be formed by cutting the wall of the root canal.

Note that, in the embodiment, since the file A as the root canal treatment tool is exemplified, the cutting edge 4b is formed thereto. However, the cutting edge 4b is not necessarily formed to the working portion 4 of all the root canal treatment tools, and the tools may be formed in a coil shape with a piercing protrusion and a taper. Even the root canal treatment tools arranged as described above can exhibit high durability by subjecting the portion 6 of the working portion 4 or the entire working portion 4 to the durable heat treatment as long as they are root canal treatment tools for treating the root canal by being rotated.

Although a method of manufacturing the file A is not particularly limited, typical methods will be briefly explained. In a first manufacturing method, the working portion is made from a material, which is previously provided with a superelastic characteristic, by being subjected to a process of removal metal, and then a part of the working portion on an extreme end side or the entire working portion is subjected to the durable heat treatment.

More specifically, a rod-shaped raw material is formed by cutting an Ni-Ti alloy wire previously provided with the superelastic characteristic and having a diameter corresponding to a size of a target file to a length of the file. Then, the raw material is processed into the shape of a taper, is processed to form a groove and a cutting edge, and is further processed to form a tip, the working portion, and a shank, thereby a needle portion is formed. At the time, since the raw material cannot be plastically processed because it has the superelastic characteristic, the respective processes to the raw material are performed by the process of removing metal, including a cutting process.

Next, a portion subjected to the durable heat treatment is formed within the range having a predetermined length from the tip of the working portion or in the entire working portion 4. This process is performed in such a manner that the portions other than a portion corresponding to the part in a needle portion previously formed into the predetermined shape, to which the durable heat treatment is applied, are cooled by a cooling agent, and heated based on heat treatment conditions having a preset temperature and keeping time. The cooling agent used at the time is not particularly limited, and, for example, water can be used.

A target file can be manufactured by inserting a shank of the needle portion, which is provided with the portion 6 composed of the range of a predetermined length from the tip of the working portion or the entire working portion to which the durable heat treatment is applied, into a grip as well as bonding them each other.

In a second manufacturing method, the range of a predetermined length corresponding to a portion subjected to the durable heat treatment from a tip on one side of a raw material or a portion corresponding to an entire working portion of the raw material is subjected to the durable heat treatment and then subjected to the process including the removal of metal, thereby the target file is manufactured by forming the working portion having a groove and a cutting edge.

In the second manufacturing method, the portion subjected to the durable heat treatment and the portion having the superelastic characteristic are formed to the raw material, and the working portion is formed by subjecting the raw material to the process of metal removal, Thus, a straight needle shape is memorized in the portion subjected to the durable heat treatment as well as a groove and a cutting edge are formed continuously to the superelastic portion.

The needle portion composed of the working portion and the shank is formed by subjecting the raw material, which is provided with the portion subjected to the durable heat treatment as described above and the portion corresponding to the superelastic portion, to the process including the removal of metal, and then the shank is inserted into and bonded to the grip, thereby the target file can be manufactured.

When the root canal treatment tool of the present invention is inserted into the root canal whose extreme end portion has a complicatedly curved shape for treatment, even if the tool is fatigued by the rotation thereof, a time passed until the tool is broken can extended, which is advantageous to the tool.

## Claims

1. A rod-shaped root canal treatment tool (A) composed of Ni-Ti alloy and having a working portion (4) of a predetermined length from a tip (3) as well as a shank (5) formed continuously to the working portion (4), **characterized in that** at least a part of the working portion (4) or the entire working portion (4) is subjected to heat treatment at 400° C to 450° C for 30 minutes to 45 minutes.

2. The rod-shaped root canal treatment tool (A) according to claim 1, **characterized in that** the part of the working portion (4) subjected to the heat treatment is a part of predetermined length starting from a tip (3) of the working portion (4).

## Patentansprüche

1. Stabförmiges Zahnwurzelbehandlungsinstrument (A), bestehend aus einer Ni-Ti-Legierung, und das von einer Spitze (3) aus einen Arbeitsabschnitt (4) mit einer vorbestimmten Länge aufweist, sowie mit einem Schaft (5), der fortlaufend an den Arbeitsabschnitt (4) angeformt ist,
**dadurch gekennzeichnet, dass** mindestens ein Teil des Arbeitsabschnitts (4) oder der gesamte Arbeitsabschnitt (4) für 30 Minuten bis 45 Minuten einer Wärmebehandlung bei 400°C bis 450°C ausgesetzt ist.

2. Stabförmiges Zahnwurzelbehandlungsinstrument (A) nach Anspruch 1,
**dadurch gekennzeichnet, dass** der Teil des Arbeitsabschnitts (4), welcher der Wärmebehandlung ausgesetzt ist, ein Teil der vorbestimmten Länge beginnend von einer Spitze (3) des Arbeitsabschnitts (4) ist.

## Revendications

1. Outil de traitement en forme de tige (A) pour le traitement du canal radiculaire, outil réalisé en alliage Ni-Ti ayant une partie active (4) d'une longueur prédéterminée à partir d'une extrémité (3) ainsi qu'un corps (5) continuant la partie active (4),
**caractérisé en ce qu'**
au moins une zone de la partie active (4) ou toute la partie active (4) est soumise à un traitement thermique de 400°C à 450°C pendant un temps de 30 minutes à 45 minutes.

2. Outil de traitement en forme de tige (A) du canal radiculaire selon la revendication 1,
**caractérisé en ce que**
la zone de la partie active (4) soumise au traitement thermique est une zone de longueur prédéterminée commençant à partir de l'extrémité (3) de la partie active (4).
